# EUROPÄISCHE PATENTSCHRIFT

(11) **EP 3 967 053 B1**
(45) Veröffentlichungstag und Bekanntmachung des Hinweises auf die Patenterteilung: **18.09.2024**
(21) Anmeldenummer: 20721179.8
(22) Anmeldetag: 21.04.2020
(51) Int. Cl.: H04R 1/02, B60N 2/879, H04R 1/28

(54) **KOPFSTÜTZE**
HEAD RESTRAINT
APPUIE-TÊTE

(30) Priorität: 09.05.2019 DE 102019206715
(43) Veröffentlichungstag der Anmeldung: 16.03.2022
(73) Patentinhaber: Audi AG, 85045 Ingolstadt (DE)
(72) Erfinder: WENZEL, Manuel, 85290 Geisenfeld (DE); KELEPIR, Haci Ramazan, 91161 Hilpoltstein (DE); KLUGE, Alexander, 85049 Ingolstadt (DE)
(86) Internationale Anmeldenummer: PCT/EP2020/061035
(87) Internationale Veröffentlichungsnummer: WO 2020/224945

(56) Entgegenhaltungen:
- EP-A1- 1 077 156
- EP-A1- 3 162 622
- EP-A1- 3 376 776
- DE-A1- 2 528 988
- US-A1- 2015 201 260

## Beschreibung

Die Erfindung betrifft eine Kopfstütze für einen Fahrzeugsitz für ein Fahrzeug für zumindest eine Person, wobei die Kopfstütze eine Vorderseite aufweist, die in Richtung der Person weist, die auf dem Fahrzeugsitz sitzt, und eine Rückseite aufweist, die gegenüber der Vorderseite der Kopfstütze angeordnet ist.

Kopfstützen bei Fahrzeugsitzen sind derart bekannt, dass die Kopfstütze in eine Rückenlehne eines Fahrzeugsitzes direkt mit integriert sein kann, so dass sich ein Bauteil ergibt, oder alternativ über ein Gestell die Kopfstütze mit der Rückenlehne eines Fahrzeugsitzes bewegbar verbunden wird. Es ist bekannt, dass ein Fahrzeugsitz zumindest neben der Rückenlehne, an den der Rücken einer Person angelehnt werden kann, auch eine Sitzfläche aufweist, wobei die Rückenlehne und die Sitzfläche gegeneinander verschiebbar sind. Alternativ sind die Rückenlehne und die Sitzfläche starr zueinander angeordnet.

Ferner ist bekannt, einen Lautsprecher in die Kopfstütze eines Fahrzeugsitzes zu integrieren, so dass die Person beispielsweise während der Fahrt auf dem Fahrzeugsitz mittels der Kopfstütze Musik hören kann. Dabei weist die Rückseite der Kopfstütze eine Abdeckung, beispielweise eine Abdeckung aus Kunststoff, auf, um ein Resonanzvolumen auf der Rückseite des Lautsprechers bilden zu können. Über einer solchen Abdeckung ist Schaumstoff in Richtung Außenseite der Kopfstütze vorhanden.

Die DE 25 28 988 A1 beschreibt eine Kopfstütze mit Lautsprechern. Hierbei dient ein Schaumstoff einer Polsterung dazu, in die rückwärtigen Räume der Lautsprecher austretende Schwingungen zu dämpfen beziehungsweise zu absorbieren.

Eine weitere Kopfstütze mit integrierter Lautsprecheranordnung ist in der EP 1 077 156 A1 beschrieben.

Aus der US 3,944,020 A, der US 2015/0298372 A1 und der EP 3 370 439 A1 sind jeweils eine Kopfstütze für ein Fahrzeug bekannt.

Nachteilig ist, dass der Aufbau einer Kopfstütze mit einem Lautsprecher oder ohne einen Lautsprecher komplex ist, so dass sich je nach Ausgestaltung der Kopfstütze verschiedene konstruktive Lösungen ermöglichen, insbesondere bei einer Anordnung eines Lautsprechers in einer Kopfstütze.

Die Aufgabe der Erfindung besteht darin, eine Möglichkeit zu schaffen, die unabhängig von der Ausgestaltung der Kopfstütze eine einfache konstruktive Lösung ermöglicht.

Die Aufgabe wird gemäß dem unabhängigen Patentanspruch 1 gelöst. Weiterbildungen der Erfindung ergeben sich aus den abhängigen Ansprüchen.

Zur Lösung der Aufgabe weist die Kopfstütze einen Kopfkasten und zumindest einen Schaumkörper auf, wobei der Schaumkörper um zumindest einen Teil des Kopfkastens herum aufbringbar ist und dabei zumindest einen Teil des in Richtung der Vorderseite der Kopfstütze angeordneten Teils des Kopfkastens bedeckt und dabei zumindest einen Teil des in Richtung der Rückseite der Kopfstütze angeordneten Teils des Kopfkastens bedeckt und der Schaumkörper derart ausgestaltet ist, dass der Teil des Schaumkörpers, der die Rückseite des Kopfkastens bedeckt, ein Resonanzvolumen bildet.

Dadurch ist es vorteilhaft möglich, dass eine einfache konstruktive Lösung in Form einer Reduktion von mehreren Bauteilen für den Kopfkasten ermöglicht wird. Auch kann ein Schaumkörper unabhängig von verschiedenen Varianten der Kopfstütze, beispielweise eine Kopfstütze mit Lautsprecher oder ohne Lautsprecher, genutzt werden. In der Variante mit Lautsprecher dient der erfindungsgemäße Schaumkörper dabei auf der Rückseite der Kopfstütze als Resonanzkörper, der das Resonanzvolumen bildet. Dieses bedeutet, dass der Schaumkörper auf der Rückseite eine Dissipation von Schallwellen von dem Lautsprecher durchführt, indem er das Resonanzvolumen bildet. Der Schaumkörper wirkt somit als Resonanzkörper.

Es ist nach der Erfindung somit möglich auf eine weitere Abdeckung, die ein Resonanzvolumen erzeugen soll, zwischen Lautsprecher und Rückseite der Kopfstütze zu verzichten. Eine solche Abdeckung kann zum Beispiel als Abdeckkappe ausgebildet sein. Nach der Erfindung ist aber eine solche Abdeckung nicht notwendig. Der Schaumkörperbereich in Richtung der Rückseite des Lautsprechers bildet das Resonanzvolumen aus, indem die Offenporigkeit des Schaumkörpers die Schallwellen, die der Lautsprecher rückseitig abstrahlt, passend als Resonanzkörper aufnimmt. Die Schallwellen, die in Richtung Rückseite von dem Lautsprecher erzeugt werden, diffundieren somit in diesen Schaumkörperbereich auf der Rückseite der Kopfstütze. Es entsteht eine Dissipation von Schallwellen in dem Schaumkörperbereich auf der Rückseite der Kopfstütze.

Die Kopfstütze weist zumindest einen Lautsprecher auf. Beispielsweise ist es möglich, dass die Kopfstütze zwei Lautsprecher aufweist. Die Lautsprecher können mit dem Kopfkasten mittels zumindest einer Schraube verschraubt sein.

Der Lautsprecher ist zwischen einer Rückseite des Kopfkastens und einem Bereich des Schaumkörpers angeordnet und eine Vorderseite des Kopfkastens ist nur von dem Schaumkörper bedeckt. Der Lautsprecher an sich ist dabei bevorzugt in Richtung Vorderseite der Kopfstütze ausgerichtet, so dass die Schallwellen aus dem Lautsprecher in Richtung Person durch den Bereich des Schaumkörpers geleitet werden können.

In dem Bereich des Schaumkörpers, der die Rückseite der Kopfstütze bildet, findet eine Dissipation des Rückschalls von einem Lautsprecher in der Kopfstütze nach der Erfindung somit statt. Somit ist keine weitere Abdeckung notwendig, um einen solchen Dissipations-Effekt zu erzeugen. Das heißt, der Schaumkörper führt die Dissipation nach der Erfindung durch.

Der Schaumkörper weist zumindest einen Bereich auf, der perforiert ist, so dass zumindest dieser perforierte Bereich des Schaumkörpers der Kopfstütze für die Transmission zumindest einer Schallwelle aus dem Lautsprecher genutzt werden kann.

Unter einer Perforation im Sinne der Erfindung ist zu verstehen, dass der Schaumkörper an dieser Stelle eine andere Dichte aufweist als der Schaumkörper an einer anderen Stellen des Schaumkörpers. Technisch kann dieses durch eine spezielle Kontur, bspw. zumindest ein Loch in dem Schaumkörper, in dem Schaum erzeugt werden. Es ist somit nach der Erfindung möglich, dass vorhandene Öffnungen im Kopfkasten, um den Schall aus einem Lautsprecher in der Kopfstütze passend durch diese Öffnungen hindurch zu leiten, mit der Perforation im Schaumkörper vor diesen Öffnungen im Kopfkasten sich überdecken oder passend angeordnet sind. Alternativ oder ergänzend können auch weitere Perforationen in den Schaumkörper eingebracht sein, um den Schall durch den Schaumkörper zu emittieren. Eine Perforation in dem Schaumkörper nach der Erfindung kann somit ein Loch, eine spezielle Freiform oder zum Beispiel eine Raute, ein Quadrat, eine Ellipse oder dergleichen sein. Bevorzugt ist die jeweilige Perforation vollständig durch den Schaumkörper durchgehend, das heißt, der Schall kann vom Lautsprecher beziehungsweise Kopfkasten durch die Perforation auf die Außenseite des Schaumkörpers geleitet werden.

Der Kopfkasten weist zumindest eine Öffnung auf, durch die die Schallwelle aus dem Lautsprecher in der Kopfstütze durch den perforierten Bereich des Schaumkörpers hindurch dringen kann. Diese Schallwellen treffen dann bevorzugt auf den Bezug und nachfolgend auf die Person auf dem Fahrzeugsitz.

In einer bevorzugten Variante der Kopfstütze ist der Kopfkasten einteilig ausgebildet.

In einer weiteren vorteilhaften Ausgestaltung weist die Kopfstütze einen Bezug auf, der den Kopfkasten und den Schaumkörper bedeckt, insbesondere den Kopfkasten, den Schaumkörper und den Lautsprecher bedeckt. Ein solcher Bezug schützt die Kopfstütze vor äußeren Einflüssen und verdeckt die Bauteile der Kopfstütze.

Es ist möglich, dass der Bezug aus Leder, Baumwolle und/oder einem Polymer besteht.

In einer weiteren vorteilhaften Ausgestaltung ist der Bezug zumindest teilweise perforiert, insbesondere im Bereich der Vorderseite der Kopfstütze.

Dadurch kann eine Person besonders gut einen Ton, das heißt die Schallwelle, aus dem Lautsprecher durch den Bezug und den Schaumkörper hören.

In einer weiteren vorteilhaften Ausgestaltung ist der Schaumkörper einteilig ausgebildet.

In einer weiteren vorteilhaften Ausgestaltung ist der Schaumkörper der Kontur des Kopfkastens angepasst, insbesondere im Inneren eine Höhle aufweisend, in die zumindest ein Teil des Kopfkastens eingebracht werden kann, so dass der Kopfkasten zumindest teilweise umhüllt ist, insbesondere dessen Vorderseite und Rückseite umhüllt. Durch die Umhüllung können auch Teile der beiden Seitenbereiche und der obere Bereich des Kopfkastens mit umhüllt werden. Bevorzugt wird die Unterseite des Kopfkastens nicht umhüllt. Die Unterseite liegt gegenüber dem oberen Bereich des Kopfkasten und ist bezogen auf eine gedachte Achse zwischen Vorder- und Rückseite oder den beiden Seitenbereichen senkrecht dazu angeordnet, das heißt mit einem 90 ° Winkel.

Eine Höhle kann im Sinne der Erfindung derart aufgefasst werden, dass Teile der Kopfstütze, wie der Kopfkasten, der Lautsprecher und/oder das Gestell in die Höhle, die das Innere des Schaumkörpers ausbildet, eingebracht werden können. Beim Überziehen des erfindungsgemäßen Schaumkörpers über den Kopfkasten wird somit der Kopfkasten von der innen liegenden Höhle des Schaumkörpers aufgenommen. Dadurch wird in diesem konkreten Beispiel der Kopfkasten umhüllt. Der Kopfkasten ist somit zumindest an der Oberseite, der Vorder- und Rückseite sowie seinen beiden Seitenbereichen vollständig durch den Schaumkörper bedeckt.

Die Kopfstütze ist somit nach der Erfindung modular aufgebaut, das heißt, es ist einfach konstruktiv aufzubauen, indem die Kopfstütze zumindest einen, bevorzugt einteiligen, Kopfkasten und zumindest einen Schaumkörper gemäß Anspruch 1 aufweist. Alternativ oder ergänzend kann somit auch ein, bevorzugt einteiliger, Kopfkasten verwendet werden

Es ist ferner nach der Erfindung möglich, dass der Schaumkörper mehrteilig aufgebaut ist, beispielweise aus zwei Einzeleilen besteht, wobei der eine Teil für die Vorderseite und der andere Teil für die Rückseite der Kopfstütze verwendet werden kann. Die Einzelteile können nach der Erfindung zusammengeführt werden, so dass sich ein einziger Schaumkörper ergibt.

Die Kopfstütze ist in einer vorteilhaften Ausgestaltung mit einem Gestell an der Rückenlehne eines Fahrzeugsitzes verbunden, wobei die Kopfstütze mittels des Gestells gegenüber der Rückenlehne verschiebbar ist. Das Gestell weist bevorzugt zwei Gestellstangen auf, die beispielsweise an dem Kopfkasten befestigt sind. Der Fahrzeugsitz selbst besteht bevorzugt aus einer Sitzfläche und einer dazu bewegbaren Rückenlehne.

In einer weiteren vorteilhaften Ausgestaltung ist es möglich, dass ergänzend die Gestellstangen im Bereich des Kopfkastens mit von dem Schaumkörper bedeckt, das heißt umhüllt, werden.

Bevorzugt besteht der Schaumkörper aus aufgeschäumten PUR-Schaum, insbesondere ein PUR-Schaum (Polyurethan-Schaum) in der MDI-Variante (Methylendiphenylisocyanat-Variante).

In einer weiteren vorteilhaften Ausgestaltung ist die Breite der Kopfstütze zwischen 150 bis 350 mm, vorzugsweise zwischen etwa 215 bis 255 mm.

In einer weiteren vorteilhaften Ausgestaltung ist die Höhe der Kopfstütze zwischen 150 bis 350 mm, vorzugsweise zwischen etwa 230 bis 270 mm.

In einer weiteren vorteilhaften Ausgestaltung ist die Dicke, das heißt der Distanz zwischen Vorder- und Rückseite, der Kopfstütze zwischen 80 bis 200 mm, vorzugsweise zwischen etwa 120 bis 160 mm.

In einer weiteren vorteilhaften Ausgestaltung ist die Dichte des Schaumkörpers der Kopfstütze zwischen 55 bis 70 kg/m³. Bevorzugt ist die Stauchhärte dabei zwischen 4,5 bis 6,75 kPa. Bevorzugt ist der Schaumkörper offenporig gestaltet.

Ferner betrifft die vorliegende Offenbarung ein Verfahren zur Herstellung eines Schaumkörpers, insbesondere eines Schaumkörpers für eine Kopfstütze, wobei der Schaumkörper in der Art hergestellt wird, dass in einem Bereich in einem Werkzeug einer Werkzeugmaschine ein Konturwerkzeug bewegbar eingebracht wird, so dass in diesem Bereich beim Aufschäumen des Schaumkörpers in dem Werkzeug sich eine Perforation durch das Konturwerkzeug in diesem Bereich des Schaumkörpers während der Herstellung des Schaumkörpers ergibt. Nach der Herstellung weist der Schaumkörper einen perforierten Bereich auf. Der perforierte Bereich kann beispielsweise ein Loch in dem Schaumkörper sein.

Ferner betrifft die vorliegende Offenbarung eine Werkzeugmaschine für das Aufschäumen von Schäumen in einem Werkzeug, dadurch gekennzeichnet, dass die Werkzeugmaschine Mittel aufweist, um das Verfahren zur Herstellung eines Schaumkörpers durchführen zu können.

Es ist somit nach der Erfindung möglich, einen einteiligen Schaumkörper in einer Kopfstütze zu verwenden, der den einteiligen Kopfkasten insoweit nahezu vollständig oder vollständig umhüllt, indem in Richtung Vorderseite der Kopfstütze Schallwellen, beispielsweise ein Ton aus dem Lautsprecher der Kopfstütze, durch den perforierten Bereich des Schaumkörpers nach außen in Richtung Person auf dem Sitz dringen kann und indem in Richtung Rückseite der Kopfstütze die rückseitig abgegebenen Schallwellen des Lautsprechers durch den auf der Rückseite der Kopfstütze angeordneten Schaumkörperbereich durch Dissipation aufgenommen werden, so dass sich nach der Erfindung ein Resonanzvolumen im hinteren Bereich der Kopfstütze dadurch ausbildet. Eine ergänzende Abdeckung, die ein solches Resonanzvolumen auch erzeugen könnte, ist somit nicht nach der Erfindung notwendig. Erfindungsgemäß bildet der Bereich des einteiligen Schaumköpers im Bereich der Rückseite der Kopfstütze dieses Resonanzvolumen passend aus.

Der Schaumkörper ist dabei in einer Ausgestaltung mützenartig ausgestaltet, so dass der Schaumkörper in einer Modulvariante über den einteiligen Kopfkasten, die beiden Lautsprecher und zwei Gestellstangen übergezogen werden kann, so dass dieser Schaumkörper diese Bauteile der Kopfstütze umhüllt, das heißt diese bedeckt. Eine gegebenenfalls vorliegende Perforation in einem Bereich der Kopfstütze wird dann passend in Richtung Vorderseite der Kopfstütze im Rahmen der Umhüllung ausgerichtet, so dass die Schallwellen passend nach außen in Richtung Person austreten können.

Weitere Bauteile, wie Schrauben, Kabel oder dergleichen, die für die Funktion der Kopfstütze mit oder ohne Lautsprecher notwendig sind, werden folglich im Rahmen eines mützenartig ausgestalteten Schaumkörpers mit umhüllt.

Weitere Vorteile und Einzelheiten der Erfindung ergeben sich aus dem folgenden Ausführungsbeispiel sowie den zugehörigen Zeichnungen. Hierbei zeigen schematisch, wobei identische oder technisch in der Funktion gleiche Bauteile oder Komponenten mit gleichen Bezugsziffern versehen sind:
- Fig. 1: eine schematische Darstellung eines Kopfkasten mit Gestell einer erfindungsgemäßen Kopfstütze in perspektivischer Vorderansicht,
- Fig. 2: eine schematische Darstellung eines Kopfkasten mit Gestell einer erfindungsgemäßen Kopfstütze in perspektivischer Rückansicht,
- Fig. 3: eine schematische Darstellung eines Lautsprechers für eine erfindungsgemäße Kopfstütze in perspektivischer Ansicht und
- Fig. 4: eine schematische Darstellung einer erfindungsgemäßen Kopfstütze in perspektivischer Seitenansicht.

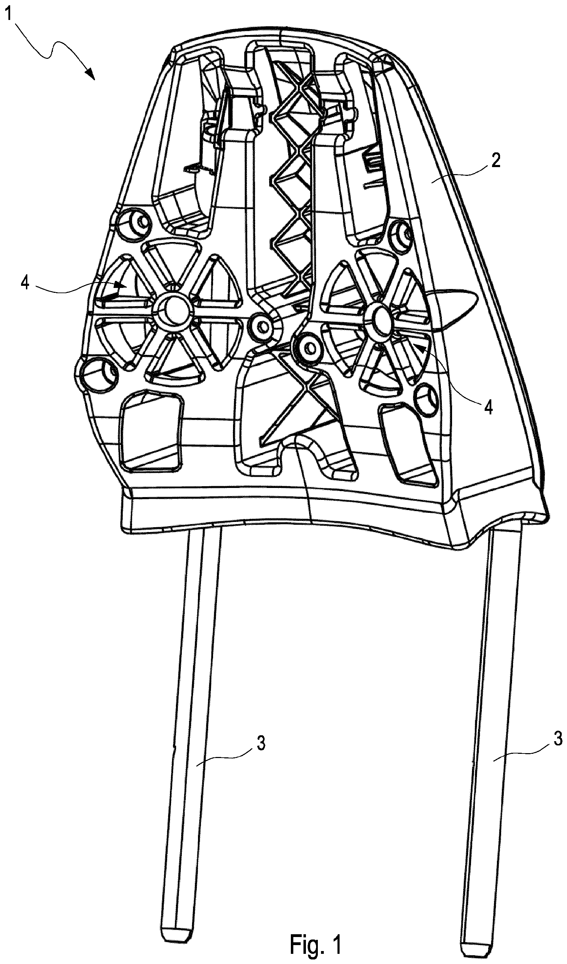

Figur 1 zeigt eine erfindungsgemäße Kopfstütze 1, wobei in Figur 1 nur der Kopfkasten 2 und zwei Gestellstangen 3 dargestellt sind. Figur 1 zeigt dabei die Seite, die in Richtung Person auf dem Fahrzeugsitz 1 weist, wenn zum Beispiel ein nicht dargestellter Bezug sowie ein nicht dargestellter perforierter, einteiliger Schaumkörper 7 entfernt worden sind. Dieser Schaumkörper 7 ist in diesem Ausführungsbeispiel derart ausgebildet, dass er eine Höhle in seinem Inneren ausbildet.

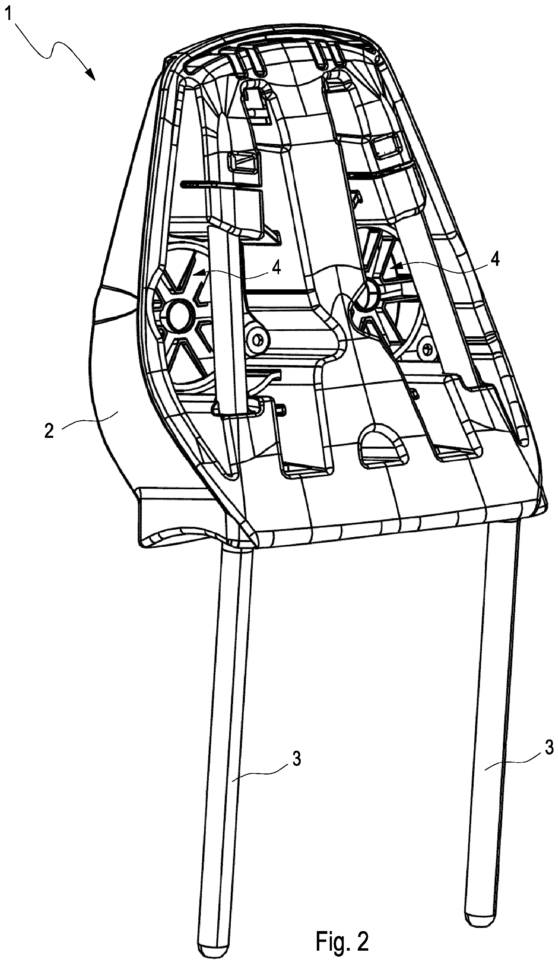

Die in Figur 1 dargestellte Seite der Kopfstütze 1 ist somit die Vorderseite. Figur 2 zeigt die Kopfstütze 1 aus Figur 1 in einer Ansicht, die der Ansicht aus Figur 1 gegenüberliegend angeordnet ist, das heißt die Kopfstütze 1 ist in Figur 2 als Rückseite dargestellt.

Der Kopfkasten 2 ist dabei einteilig ausgebildet und weist zwei Bereiche auf, die die Aufnahme jeweils eines Lautsprechers 5 ermöglichen. Diese beiden Bereiche sind als Lautsprechermulden 4 ausgebildet.

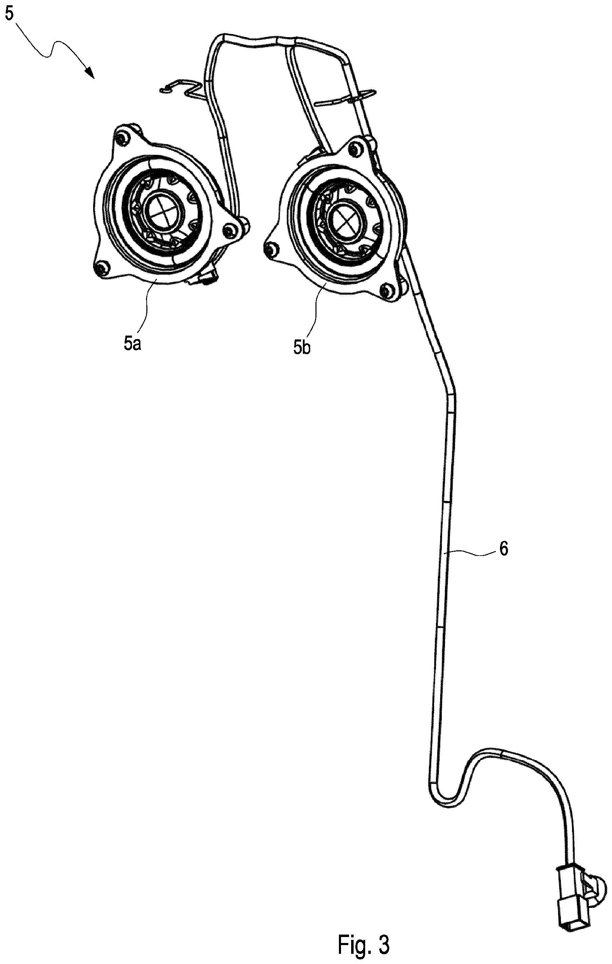

Ein Lautsprecher 5 in Form von zwei Einzellautsprechern 5a, 5b für die Kopfstütze 1 ist in Figur 3 dargestellt. Des Weiteren zeigt Figur 3 ein Lautsprecherkabel 6, mit dem der jeweilige Einzellautsprecher 5a, 5b angesteuert werden kann.

Die Lautsprechermulden 4 in dem Kopfkasten 2 nach Figuren 1 und 2 sind derart ausgebildet, dass an diesen Stellen der einteilige Kopfkasten 2 zumindest eine Öffnung aufweist, so dass Schallwellen aus dem jeweiligen Lautsprecher 5 in der Lautsprechermulde 4 direkt auf den perforierten Bereich 7a des Schaumkörpers 7 und nachfolgend auf den nicht dargestellten Bezug auftreffen können. In der Figur 1 sind sechs Öffnungen eingezeichnet, die einer jeweiligen Lautsprechermulde 4 im Kopfkasten 2 zugeordnet sind. Das heißt jede Lautsprechermulde 4 hat sechs Öffnungen. Die Lautsprecher 5 werden in der jeweiligen Lautsprechermulde 4 verschraubt, wobei dieses nicht in den Figuren dargestellt ist.

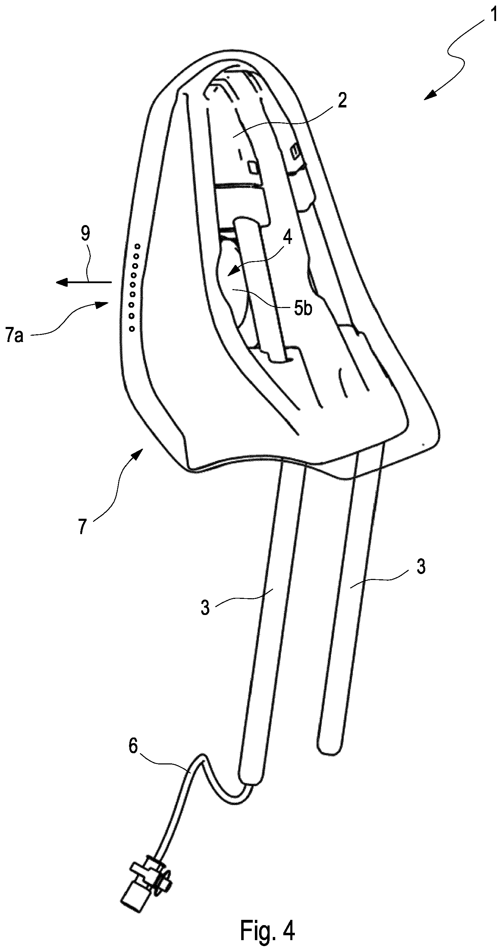

Figur 4 zeigt eine Kopfstütze 1 nach den Figuren 1 und 2, die unter anderem einen Kopfkasten 2 und ferner zwei Gestellstangen 3 aufweist. In die beiden Lautsprechermulden 4 ist nach Figur 4 jeweils ein Einzellautsprecher 5a, 5b nach Figur 3 eingesetzt und passend mit dem Kopfkasten 2 verschraubt.

In Richtung Vorderseite der Kopfstütze 1 ist nach Figur 4 der Schaumkörper 7 angedeutet, wobei nach Figur 4 der Kopfkasten 2 zwischen Lautsprecher 5 und Schaumkörper 7 bezogen auf die Vorderseite angeordnet ist. Bezogen auf die Rückseite verdeckt der Schaumkörper 7 die zwei Gestellstangen 3 sowie den Lautsprecher 5. Die Rückseite der Kopfstütze 1 ist somit auch durch den Schaumköper 2 passend abgedeckt bzw. umhüllt. Die Bauteile sind somit in der sich ausbildenden Höhle des Schaumkörpers 7 liegend, wenn der Schaumkörper 7 über die Bauteile gezogen ist. Der Schaumkörper 7 ist nach Figur 4 im vorderen Bereich in Richtung Vorderseite perforiert ausgestaltet. Es bildet sich somit in diesem Bereich ein perforierter Bereich 7a aus. Die in Figur 4 dargestellten Bauteile der Kopfstütze 1 sind aufgrund der schematischen Darstellung nur angedeutet bzw. andeutbar.

Der Schaumkörper 7 ist somit auf den Kopfkasten 2 in Figur 4 derart aufgebracht, dass dieser den Kopfkasten 2, die zwei Gestellstangen 3 im Bereich des Kopfkastens 2 und den Lautsprecher 5 passend umhüllt.

Diese Kopfstütze 1 kann nach der Erfindung von einem nicht dargestellten Bezug umhüllt sein.

Wenn Schall 9, das heißt ein Ton oder eine Schallwelle, aus einem Lautsprecher 5 kommt, wird dieser durch die Öffnungen der Lautsprechermulden 4, nachfolgend durch den perforierten Bereich 7a des Schallkörpers 7, das heißt beispielhaft eine durchgehende Öffnung nach Art eines Lochs, und den nicht dargestellten Bezug auf die Person auf dem Fahrzeugsitz 1 geleitet. Es erfolgt somit eine Transmission in Richtung Vorderseite durch den Schall 9.

Der Bereich des Schaumkörpers 7, der in Richtung Rückseite der Kopfstütze 1 weist, bildet dabei das Resonanzvolumen zwischen Lautsprecher 5 und Schaumkörper 7 selbst. In diesem Resonanzvolumen des Schaumkörpers 7 findet Dissipation des Rückschalls statt, der in Richtung Rückseite der Kopfstütze 1 vom Lautsprecher 5 erzeugt wird. Der Schaumkörper 7 selbst wirkt somit in seinem Bereich auf der Rückseite als Resonanzkörper, wobei keine weitere Abdeckung in Form zum Beispiel einer weiteren Abdeckkappe oder dergleichen notwendig ist, um einen solchen Effekt zu erzeugen.

## Patentansprüche

1. Kopfstütze (1) für einen Fahrzeugsitz für ein Fahrzeug für zumindest eine Person, wobei die Kopfstütze (1) eine Vorderseite aufweist, die in Richtung der Person weist, die auf dem Fahrzeugsitz sitzt, und eine Rückseite aufweist, die gegenüber der Vorderseite der Kopfstütze (2) angeordnet ist, wobei die Kopfstütze einen Kopfkasten (2) und zumindest einen Schaumkörper (7) aufweist, wobei der Schaumkörper (7) um zumindest einen Teil des Kopfkastens (2) herum aufbringbar ist und dabei zumindest einen Teil des in Richtung der Vorderseite der Kopfstütze angeordneten Teils des Kopfkastens (2), nämlich eine Vorderseite des Kopfkastens, bedeckt und dabei zumindest einen Teil des in Richtung der Rückseite der Kopfstütze angeordneten Teils des Kopfkastens (2), nämlich eine Rückseite des Kopfkastens, bedeckt, wobei die Kopfstütze (1) zumindest einen Lautsprecher (5) aufweist und der Schaumkörper derart ausgestaltet ist, dass der Teil des Schaumkörpers (7), der die Rückseite des Kopfkastens (2) bedeckt, ein Resonanzvolumen bildet, wobei der Schaumkörper (7) auf der Rückseite eine Dissipation von Schallwellen von dem Lautsprecher durchführt, wobei der Schaumkörper (7) als Resonanzkörper wirkt, **dadurch gekennzeichnet, dass** der Lautsprecher (5) zwischen der Rückseite des Kopfkastens (2) und dem Teil des Schaumkörpers, der die Rückseite des Kopfkastens bedeckt, angeordnet ist, und die der Rückseite des Kopfkastens (2) gegenüberliegend angeordnete Vorderseite des Kopfkastens (2) nur von dem Schaumkörper (7) bedeckt ist, wobei die Vorderseite des Kopfkastens (2) in Richtung der Person auf dem Fahrzeugsitz (1) weist, wobei der Schaumkörper (7) zumindest einen Bereich aufweist, der perforiert ist, und wobei der Kopfkasten (2) zumindest eine Öffnung aufweist, durch die die Schallwelle aus dem Lautsprecher (5) in der Kopfstütze (1) durch den perforierten Bereich (7a) des Schaumkörpers (7) hindurch nach außen in Richtung Person auf dem Fahrzeugsitz (1) dringen kann.

2. Kopfstütze nach Anspruch 1, **dadurch gekennzeichnet, dass** der Kopfkasten (2) einteilig ausgebildet ist.

3. Kopfstütze nach einem der vorhergehenden Ansprüche, **dadurch gekennzeichnet, dass** die Kopfstütze (1) einen Bezug aufweist, der den Kopfkasten und den Schaumkörper (7) bedeckt, insbesondere den Kopfkasten, den Schaumkörper und den Lautsprecher bedeckt.

4. Kopfstütze nach einem der vorhergehenden Ansprüche, **dadurch gekennzeichnet, dass** der Bezug zumindest teilweise perforiert ist, insbesondere im Bereich der Vorderseite der Kopfstütze (1) perforiert ist.

5. Kopfstütze nach einem der vorhergehenden Ansprüche, **dadurch gekennzeichnet, dass** der Schaumkörper (7) einteilig ausgebildet ist.

6. Kopfstütze nach einem der vorhergehenden Ansprüche, **dadurch gekennzeichnet, dass** der Schaumkörper (7) der Kontur des Kopfkastens (2) angepasst ist, insbesondere im Inneren eine Höhle aufweisend, in die zumindest ein Teil des Kopfkastens (2) eingebracht werden kann, so dass der Kopfkasten (2) zumindest teilweise umhüllt ist, insbesondere dessen Vorderseite und Rückseite umhüllt.

## Claims

1. Head restraint (1) for a vehicle seat for a vehicle for at least one person, wherein the head restraint (1) has a front side, which points in the direction of the person which is sitting on the vehicle seat, and has a rear side, which is arranged opposite to the front side of the head restraint (2), wherein the head restraint has a head box (2) and at least one foam body (7), wherein the foam body (7) can be mounted about at least a part of the head box (2) and, in this regard, covers at least a part of the part of the head box (2) arranged in the direction of the front side of the head restraint, specifically a front side of the head box, and in this regard covers at least a part of the part of the head box (2) arranged in the direction of the rear side of the head restraint, specifically a rear side of the head box (2), wherein the head restraint (1) has at least one loudspeaker (5) and the foam body is designed such that the part of the foam body (7) which covers the rear side of the head box (2) forms a resonance volume, wherein the foam body (7) on the rear side effects a dissipation of sound waves from the loudspeaker, wherein the foam body (7) acts as a resonance body, **characterised in that** the loudspeaker (5) is arranged between the rear side of the head box (2) and the part of the foam body which covers the rear side of the head box, and the front side of the head box (2), arranged opposite the rear side of the head box (2), is covered only by the foam body (7), wherein the front side of the head box (2) points in the direction of the person on the vehicle seat (1), wherein the foam body (7) has at least one region which is perforated, and wherein the head box (2) has at least one opening through which the sound wave from the loudspeaker (5) in the head restraint (1) is able to penetrate through the perforated region (7a) of the foam body (7) to the outside in the direction of the person on the vehicle seat (1).

2. Head restraint according to claim 1, **characterised in that** the head box (2) is designed integrally.

3. Head restraint according to any of the preceding claims, **characterised in that** the head restraint (1) has a cover which covers the head box and the foam body (7), in particular covers the head box, the foam body and the loudspeaker.

4. Head restraint according to any of the preceding claims, **characterised in that** the cover is at least partially perforated, in particular is perforated in the region of the front side of the head restraint (1).

5. Head restraint according to any of the preceding claims, **characterised in that** the foam body (7) is designed integrally.

6. Head restraint according to any of the preceding claims, **characterised in that** the foam body (7) is adapted to the contour of the head box (2), in particular having a cavity in the interior, into which at least a part of the head box (2) can be introduced, such that the head box (2) is at least partially enclosed, in particular its front side and rear side are enclosed.

## Revendications

1. Appui-tête (1) pour un siège de véhicule pour un véhicule pour au moins une personne, dans lequel l'appui-tête (1) présente une face avant qui est orientée dans la direction de la personne qui est assise sur le siège de véhicule et présente une face arrière qui est disposée à l'opposé de la face avant de l'appui-tête (2), dans lequel l'appui-tête présente un caisson de tête (2) et au moins un corps expansé (7), dans lequel le corps expansé (7) peut être placé autour d'au moins une partie du caisson de tête (2) et de ce fait recouvre au moins une partie de la partie du caisson de tête (2) disposée dans la direction de la face avant de l'appui-tête, à savoir une face avant du caisson de tête, et de ce fait au moins une partie de la partie du caisson de tête (2) disposée dans la direction de la face arrière de l'appui-tête, à savoir une face arrière du caisson de tête, dans lequel l'appui-tête (1) présente au moins un haut-parleur (5) et le corps expansé est configuré de telle sorte que la partie du corps expansé (7) qui recouvre la face arrière du caisson de tête (2) forme un volume de résonance, dans lequel le corps expansé (7) réalise sur la face arrière une dissipation d'ondes acoustiques par le haut-parleur, dans lequel le corps expansé (7) agit en tant que corps de résonance, **caractérisé en ce que** le haut-parleur (5) est disposé entre la face arrière du caisson de tête (2) et la partie du corps expansé qui recouvre la face arrière du caisson de tête, et la face avant du caisson de tête (2) disposée de manière opposée à la face arrière du caisson de tête (2) n'est recouverte que par le corps expansé (7), dans lequel la face avant du caisson de tête (2) est orientée dans la direction de la personne sur le siège de véhicule (1), dans lequel le corps expansé (7) présente au moins une zone qui est perforée et dans lequel le caisson de tête (2) présente au moins une ouverture à travers laquelle l'onde acoustique provenant du haut-parleur (5) dans l'appui-tête (1) peut passer à travers la zone perforée (7a) du corps expansé (7) vers l'extérieur dans la direction de la personne sur le siège de véhicule (1).

2. Appui-tête selon la revendication 1, **caractérisé en ce que** le caisson de tête (2) est réalisé d'un seul tenant.

3. Appui-tête selon l'une quelconque des revendications précédentes, **caractérisé en ce que** l'appui-tête (1) présente un revêtement qui recouvre le caisson de tête et le corps expansé (7), qui recouvre en particulier le caisson de tête, le corps expansé et le haut-parleur.

4. Appui-tête selon l'une quelconque des revendications précédentes, **caractérisé en ce que** le revêtement est perforé au moins partiellement, est en particulier perforé dans la zone de la face avant de l'appui-tête (1).

5. Appui-tête selon l'une quelconque des revendications précédentes, **caractérisé en ce que** le corps expansé (7) est réalisé d'un seul tenant.

6. Appui-tête selon l'une quelconque des revendications précédentes, **caractérisé en ce que** le corps expansé (7) est adapté au contour du caisson de tête (2), présentant en particulier à l'intérieur une cavité dans laquelle au moins une partie du caisson de tête (2) peut être intégrée de sorte que le caisson de tête (2) soit enveloppé au moins partiellement, en particulier enveloppe la face avant et la face arrière de celui-ci.
